# EUROPÄISCHE PATENTANMELDUNG

(11) **EP 2 489 467 A1**
(43) Veröffentlichungstag der Anmeldung: **22.08.2012**
(21) Anmeldenummer: 11001195.4
(22) Anmeldetag: 15.02.2011
(51) Int. Cl.: B24B 9/14, B24B 49/12

(54) **Vorrichtung und Verfahren zum Bearbeiten einer optischen Linse mit einer Vorrichtung zur optischen Erfassung des Übergangs des Linsenmaterials zum Block- oder Folienmaterial zur Bestimmung des Randkantenverlaufs der Linse**

(71) Anmelder: Schneider GmbH & Co. KG, 35112 Fronhausen (DE)
(72) Erfinder: Schneider, Gunter, 35037 Marburg (DE); Gerrath, Torsten, 35037 Marburg (DE)
(74) Vertreter: Häckel, Stefan

(57) **Zusammenfassung**

Eine Vorrichtung (1) und ein Verfahren zum Bearbeiten eines Randes (26) einer optischen Linse (2), wobei der Übergang des Linsenmatenals zu einem sich entlang einer Randkante (20) anschließenden Blockmaterial (4A,4B) oder Folienmaterial (5) mit Hilfe einder Kamera (6) optisch erfasst wird, um den Verlauf der Randkante (20) zu bestimmen. In einem Ausführungsbeispiel unterscheidet sich zur Erleichtung der optischen Erfassung das Material der Folie (5) bzw. des Blockstücks (48) hinsichtlich Farbe, Reflektivität, Transmissivität und/oder Lumineszenz vom Material der Linse (2) bzw. Folie (8).

## Beschreibung

Die vorliegende Erfindung betrifft eine Vorrichtung zum Bearbeiten einer optischen Linse gemäß dem Oberbegriff des Anspruchs 1 sowie ein Verfahren zum Bearbeiten einer optischen Linse gemäß dem Oberbegriff des Anspruchs 9.

Eine optische Linse, beispielsweise für eine Brille, soll bestimmte optische Eigenschaften aufweisen. Die damit einhergehenden gewünschten optischen Daten der Linse werden beispielsweise von einem Augenoptiker bestimmt. Früher wurden Linsen mit vorbestimmten optischen Daten, beispielsweise mit in verschiedenen Stufen erhältlichen Dioptrien, eingesetzt. Zunehmend werden jedoch Linsen eingesetzt, die die jeweils gewünschten, individualisierten optischen Daten bzw. die damit einhergehenden optischen Eigenschaften auf weisen. Derartige Linsen werden dann in Abhängigkeit von den jeweils gewünschten optischen Daten bearbeitet bzw. gefertigt, wobei die Linsen insbesondere spandend, vorzugsweise durch Drehen und/oder Fräsen, bearbeitet werden.

Zum Bearbeiten einer Linse wird diese gemäß der vorliegenden Erfindung und, wie bereits aus dem Stand der Technik bekannt, auf einem sogenannten Blockstück als Halter temporär befestigt (geblockt). Beim Blocken wird die Linse insbesondere mittels eines Blockmaterials gehaltert. Besonders bevorzugt wird zum Blocken das Blockmaterial verflüssigt und gegen eine Flachseite der Linse gegossen. Diese Flachseite der Linse kann, insbesondere wenn die Flachseite bereits fertigt bearbeitet ist, durch eine auf der Linse angebrachte Folie abgedeckt sein. In diesem Fall hält das Blockstück bzw. Blockmaterial die geblockte Linse über die Folie.

Die geblockte Linse kann umfangsseitig, also randseitig, insbesondere spanend bzw. formgebend bearbeitet werden, um die Linse insbesondere bei Verwendung in einer Brille als Brillenglas an ein Brillengestell bzw. eine gewünschte Randform anzupassen. Diese Art der Bearbeitung wird auch als Randbearbeitung bezeichnet.

Unter dem Begriff "Rand" wird im Sinne der vorliegenden Erfindung insbesondere eine umfangsseitige Fläche verstanden, die vorzugsweise über den Umfang geschlossen ist. Beispielsweise bei einer Linse mit kreisrunder Außenkontur bildet der Rand also eine Zylinderfläche, meistens erhält er aber eine andere Form.

Unter dem Begriff "Kante" wird im Sinne der vorliegenden Erfmdung vorzugsweise der insbesondere im Wesentlichen linienartige Übergang von dem Rand zu einer benachbarten Stirn- oder Flachseite verstanden.

Nach einer ersten Randbearbeitung oder Grobbearbeitung ist die Kenntnis des Verlaufs der Kante insbesondere für die weitere Bearbeitung und/oder ur Qualitätskontrolle erforderlich oder zumindest vorteilhaft. Dieser Verlauf kann grundsätzlich mit einer entsprechenden Messmaschine o.dgl. bestimmt werden. Der Einsatz einer solchen Messmaschine ist jedoch sehr aufwendig und insbesondere für die Brillenglasherstellung mit hohen Durchsätzen nicht geeignet.

Die EP 1 250 979 A2 beschreibt ein Verfahren zur Randbearbeitung einer optischen Linse. Der Rand der um eine Werkstückdrehachse winkelgesteuert drehbaren Linse wird mittels eines radial zustellbaren Randbearbeitungswerkzeugs vorbearbeitet, wobei die Linse eine bis auf ein geringes Übermaß einer Linsenfassung entsprechende Umfangskontur erhält. Es erfolgt ein berührungsloses Messen des vorbearbeiteten Linsenrandes und ein fertig Bearbeiten des Linsenrandes unter Berücksichtigung der ermittelten Randdaten. Um eine genauere und schnellere Ermittlung der Randdaten zu ermöglichen, wird bei der Vorbearbeitung eine im trockenen Zustand definiert matte Randoberfläche erzeugt. Die trockene bzw. getrocknete Oberfläche wird mittels eines Lasers und einer Videokamera berührungslos vermessen.

Der vorliegenden Erfindung liegt die Aufgabe zugrunde, eine Vorrichtung und ein Verfahren zum Bearbeiten einer optischen Linse anzugeben, wobei die Bearbeitung eines Rands und/oder einer Randkante ermöglicht oder erleichtert wird und/oder die Bestimmung des Verlaufs einer Kante ermöglicht oder er-Ieichtert wird.

Die obige Aufgabe wird durch eine Vorrichtung gemäß Anspruch 1 oder durch ein Verfahren gemäß Anspruch 9 gelöst. Vorteilhafte Weiterbildungen sind Gegenstand der Unteransprüche.

Ein Aspekt der vorliegenden Erfindung liegt darin, dass die Linse auf einem Blockstück geblockt wird und die geblockte Linse insbesondere zusammen mit dem Blockstück umfangsseitg, also randseitig, bearbeitet wird. Vor dieser (ersten) Randbearbeitung kann eine insbesondere formgebende Bearbeitung, vorzugsweise ein Polieren, und/oder ein Beschichten, insbesondere der dem Blockstück abgewandten Flachseite der Linse erfolgen. So wird eine einfache und schnelle Bearbeitung ermöglicht, da insbesondere ein erneutes Spannen oder sonstiges Befestigen, insbesondere Blocken, der Linse nicht erforderlich ist. Des Weiteren wird eine individuelle Bearbeitung ermöglicht, da das Blockstück bzw. Blockmaterial bei der Randbearbeitung der Linse mit abgetragen wird bzw. werden kann, wodurch quasi beliebige Randformen realisiert werden können, ohne dass auf einen bestimmten Durchmesser des Blockstücks oder auf eine bestimmte axiale Lage des Blockstücks relativ zur Linse beim Blocken und/oder Bearbeiten Rücksicht genommen werden muss. Dementsprechend wird eine einfache und schnelle Bearbeitung der Linse ermöglicht.

Ein weiterer Aspekt der vorliegenden Erfmdung liegt darin, dass - insbesondere nach der (ersten) Randbearbeitung - der Übergang zwischen dem Linsenmaterial und dem sich anschließenden Blockstück, Blockmaterial oder Folienmaterial und/oder der Übergang der Folie zu dem sich anschließenden Blockstück oder Blockmaterial optisch erfasst wird, um daraus den Verlauf der dem Blockstück bzw. Blockmaterial zugewandten Randkante der Linse zu bestimmen. Dies gestattet oder erleichtert eine sehr einfache, genaue und/oder schnelle Bestimmung des Verlaufs der Randkante und dementsprechend eine einfache, genaue und/oder schnelle Bearbeitung, beispielsweise eine anschließende weitere Bearbeitung oder Feinbearbeitung des Randes und/oder der Randkante.

Die optische Erfassung erfolgt insbesondere mittels einer Kamera. Die Kamera ist insbesondere seitlich neben der Linse angeordnet und/oder relativ zu der Linse über den Linsenumfang bewegbar. Dies gestattet eine sehr einfache und/oder kostengünstige Realisierung. Insbesondere erfolgt das optische Erfassen ohne Umspannen der Linse und/oder des Blockstücks.

Besonders bevorzugt ist die Linse bzw. das Blockstück winkelgesteuert drehbar und/oder erfolgt eine Erfassung der Drehlage bzw. Winkellage der Linse bei der optischen Erfassung des genannten Übergangs bzw. der genannten Übergänge. Besonders bevorzugt wird dann aus dem erfassten Übergang oder aus den erfassten Übergängen unter Berücksichtigung der Dreh- bzw. Winkellage während der optischen Erfassung der Verlauf der Randkante bestimmt. Dies ermöglicht insbesondere eine Zuordnung der Drehlage des Verlaufs zu der Drehlage der Linse.

Vorzugsweise erfolgt zusätzlich zu der genannten optischen Erfassung auch eine Abstandsmessung, insbesondere zur Bestimmung des Radius des Randes und/oder der Randkante der Linse, also des Abstands des bearbeiteten Rands von einer Achse, um die die Linse insbesondere während der optischen Erfassung gedreht wird. Diese Messung erfolgt vorzugsweise optisch oder berügungslos, beispielsweise mittels der Kamera und/oder einer zweiten Kamera, die beispielsweise schräg oder quer zur ersten Kamera angeordnet ist, und/oder durch eine Lasermessung o.dgl. Jedoch kann die Messung auch durch einen Taster oder auf sonstige geeignete Weise erfolgen.

Der Verlauf der Randkante wird besonders bevorzugt durch Glätten und/oder Approximieren und/oder unter Verwendung von Solldaten oder Bearbeitungsdaten und/oder unter Berücksichtigung der Solldicke oder mittleren Dicke der Folie, soweit vorhanden, aus dem erfassten Übergang oder den erfassten Übergängen bestimmt. Bei dem bestimmten Verlauf handelt es sich also insbesondere um eine Näherung. So kann eine einfache, genaue und/oder schnelle Bestimmung des Verlaufs erfolgen. Dementsprechend wird eine sehr schnelle Bearbeitung ermöglicht.

Ein anderer Aspekt der vorliegenden Erfindung liegt darin, dass die Randkante der umfangsseitig bzw. randseitig bearbeiteten, geblockten Linse, insbesondere bei unmittelbar an der zu bearbeitenden Randkante anstehendem bzw. anliegendem Blockmaterial oder Blockstück bearbeitet wird, wobei zwischen Linse einerseits und Blockmaterial oder Blockstück andererseits optional eine Folie oder sonstige Zwischenschicht, Haftschicht o.dgl. angeordnet sein kann. Dies gestattet wiederum eine einfache und/oder schnelle Bearbeitung. Insbesondere ist gerade auch bei speziellen Randformen ein Umspannen oder erneutes Blocken der Linse nicht erforderlich.

Vorzugsweise wird ein Blockmaterial und/oder Blockstück aus Kunststoff zum Blocken der Linse eingesetzt. Dies erleichtert dessen Bearbeitung und erlaubt insbesondere ein definiertes formgebendes, besonders bevorzugt spanendes Bearbeiten des Blockmaterials und/oder Blockstücks zusammen mit der Linse, insbesondere mit demselben Bearbeitungswerkzeug. Dies ist einer einfachen und schnellen Bearbeitung zuträglich.

Einzelne der vorgenannten und nachfolgenden Aspekte und Merkmale der vorliegenden Erfindung können beliebig miteinander kombiniert, aber auch unabhängig voneinander realisiert werden.

Weitere Aspekte, Merkmale, Vorteile und Eigenschaften der vorliegenden Erfindung ergeben sich aus den Ansprüchen und der nachfolgenden Beschreibung eines bevorzugten Ausführongsbeispiels anhand der Zeichnung. Es zeigt:
- Fig. 1: einen schematischen Aufbau einer vorschlagsgemäßen Vorrichtung mit einer zu bearbeitenden Linse;
- Fig. 2: eine schematische Ansicht der geblockten Linse mit einer zugeordneten Kamera und Beleuchtungseinrichtung; und
- Fig. 3: eine ausschnittsweise Vergrößerung von Fig. 2.

In den Figuren werden für gleiche oder gleichartige Komponenten und Einrichtungen die gleichen Bezugszeichen verwendet, wobei sich die gleichen oder entsprechenden Vorteile und Eigenschaften ergeben, auch wenn eine wiederholte Beschreibung weggelassen ist.

Gegenstand der Erfindung ist eine Vorrichtung 1 zum Bearbeiten einer optischen Linse 2. Ausgangspunkt für die Entstehung bzw. Bearbeitung einer optischen Linse 2 ist ein Linsenrohling. Dieser wird spanend oder in einer sonstigen formgebenden Bearbeitung und vorzugsweise in mehreren Bearbeitungsschritten so bearbeitet, dass am Ende eine fertige optische Linse 2 mit den gewünschten optischen Eigenschaften steht. Der Begriff "Linse" bezeichnet im Rahmen der vorliegenden Beschreibung vorzugsweise sowohl den Linsenrohling vor Durchführung der notwendigen Bearbeitungsschritte, als auch am Ende die fertige Linse 2,

Die Linse 2 bzw. der Linsenrohling besteht vorzugsweise aus Kunststoff. Jedoch kann grundsätzlich auch ein sonstiger in geeigneter Weise zu bearbeitender Werkstoff, ggf, auch Glas bzw. Mineralglas, verwendet werden, Wenn die fertige Linse 2 für eine Brille (nicht dargestellt) eingesetzt bzw. verwendet werden soll, was vorzugsweise der Fall ist, wird die Linse 2 bei der vorliegenden Erfindung auch als Brillenglas bezeichnet, selbst wenn die Linse 2 gegebenenfalls nicht aus Glas besteht.

Die Vorrichtung 1 weist vorzugsweise mindestens oder ausschließlich eine Bearbextungseinrichtung 3 zum insbesondere spanenden oder sonstigen formgebenden Bearbeiten der Linse 2 als zu bearbeitendes Werkstück auf.

Im dargestellten und bevorzugten Ausführungsbeispiel weist die Bearbeitungseinrichtung 3 vorzugsweise eine Werkstückspindel 3A auf, die vorzugsweise in eine X-Richtung und Y-Richtung verfahrbar ist, insbesondere mittels eines Kreuzschlittens, der nur angedeutet ist. Die beiden Richtungen X und Y verlaufen vorzugsweise quer oder senkrecht zueinander.

Bei der Werkstückspindel 3A handelt es sich insbesondere um eine vorzugsweise direkt angetriebene, präzise gelagerte Welle bzw. einen Direktantrieb oder einen sonstigen Antrieb jeweils mit vorzugsweise integrierter oder zugeordneter Schnittstelle oder Aufnahme 3B für das Werkstück, hier also für die Linse 2 bzw. den Linsenrohling, Grundsätzlich kann eine direkte Aufnahme bzw, Einspannung der Linse 2 erfolgen. Vorzugsweise wird die Linse 2 im geblockten Zustand eingespannt bzw. bearbeitet. Vorzugsweise wird die Linse 2 bzw. der Linsenrohling mittelbar über einen Halter bzw. sogenannten Block 4, insbesondere ein sogenanntes Blockstück 4B, gehalten. Das Blockstück 4B wird dann eingespannt.

Die Werkstückspindel 3A weist beim Darstellungsbeispiel vorzugsweise die Aufnahme 3B, insbesondere eine Spannzange, für das Blockstück 4B auf.

Die Linse 2 bzw, das Blockstück 4B ist bzw, sind vorzugsweise in einer bestimmten axialen Lage und/oder Drehlage einspannbar, um die Linse 2 definiert bearbeiten zu können. Hierzu kann das Blockstück 4B eine entsprechende Form insbesondere in einem Schaft- oder Einspannbereich aufweisen.

Mittels der Werlrstückspindel 3A ist die eingespannte Linse 2 zur Bearbeitung in Drehung bzw. Rotation versetzbar. Die Werkstückspindel 3A bildet also insbesondere einen Drehantrieb für die Linse 2. Die Werkstückspindel 3A bildet insbesondere eine gerechnete oder gesteuerte Rundachse C. Insbesondere erfolgt eine CNC-Steuerung der Werkstückspindel 3A bzw. der Rotation der Linse 2.

Besonders bevorzugt ist die Linse 2 gesteuert oder geregelt mit einer definierten Drehlage in Drehung bzw. Rotation versetzbar.

Im dargestellten Ausführungsbeispiel ist die Werkstückspindel 3A mit dem eingespannten bzw. aufgeblockten Linsenrohling 2 vorzugsweise in X-Richtung und/oder in Y-Richtung und/oder in Z-Richtung relativ zu einem Bearbeitungswerkzeug bewegbar bzw, verfahrbar, beispielsweise mittels eines in X- und Y-Richtung bewegbaren Kreuzschlitten mit der Werkstückspindel 3A und/oder mittels eines in Z-Richtung bewegbaren Schlittens oder Linearantriebs, der den Antrieb 3C trägt. Insbesondere werden eine gesteuerte X-Achse, Y-Achse und/oder Z-Achse bzw. Linearachsen gebildet. Die Z-Achse verläuft vorzugsweise quer oder senkrecht zur X- und/oder Y-Richtung und/oder zumindest im Wesentlichen parallel zur C-Achse.

Grundsätzlich sind auch andere oder zusätzliche Richtungen und/oder Bewegungsachsen möglich. Insbesondere kann die axiale Ausrichtung der Rundachse C der Werkstückspindel 3A auch schräg zur Z-Richtung verlaufen und/oder schwenkbar sein, insbesondere um die angedeutete Schwenkachse B. Die Achse B verläuft vorzugsweise quer oder senkrecht zur C-Achse, Z-Achse und/oder Y-Achse und/oder parallel zur X-Achse.

Der Begriff "Achse" wird bei der vorliegenden Erfindung besonders bevorzugt im Sinne der Terminologie bei CNC-Steuerungen (numerischen bzw. rechnergestützten Steuerungen) als eine gesteuerte oder geregelte bzw. gerechnete Bewegungsachse, wie eine Linearachse oder Rundachse, verstanden. Dies gilt insbesondere für einzelne oder alle Teile der Bearbeitungseinrichtung 3 bzw. für die vorschlagsgemäße Vorrichtung 1 insgesamt.

Die Bearbeitungseinrichtung 3 ist vorzugsweise zum Bearbeiten der Linse 2 durch Fräsen, Schleifen und/oder Polieren ausgebildet. Jedoch kann die Bearbeitungseinrichtung 3 alternativ oder zusätzlich auch ein sonstiges, insbesondere spannendes oder formgebendes Bearbeiten der Linse 2 ermöglichen.

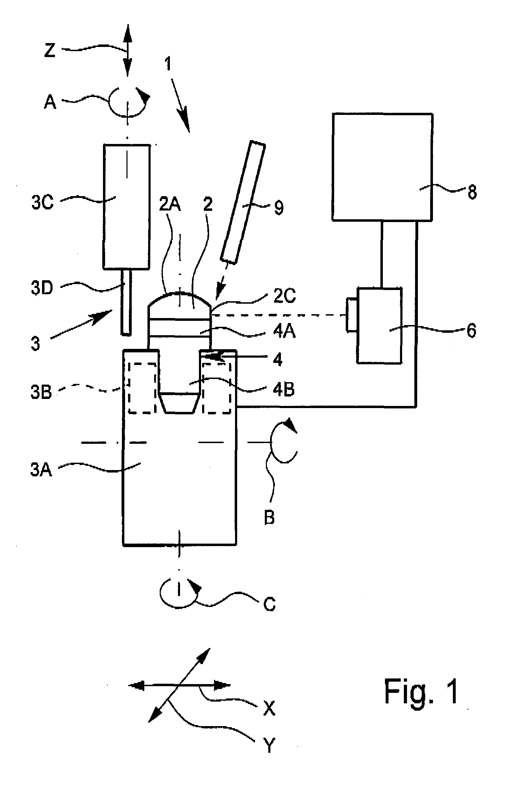

Beim Darstellungsbeispiel weist die Bearbeitungseinrichtung 3 vorzugsweise einen Halter oder Antrieb 3C mit einem Werkzeug 3D, wie einem Fräser, auf. Hier ist als Bearbeitungswerkzeug insbesondere also das Fräswerkzeug 3D vorgesehen, das mittels des Antriebs 3C in Drehung bzw. Rotation versetzbar, insbesondere um die in Fig. 1 schematisch angedeutete Drehachse A. Die Achse A verläuft vorzugsweise zumindest im Wesentlichen parallel zur Z-Achse.

Die Linse 2 und das jeweilige Bearbeitungswerkzeug 3C sind vorzugsweise relativ zueinander zustellbar und/oder bewegbar, um die jeweilige Bearbeitung zu ermöglichen.

Die Bearbeitungseinrichtung 3 ist vorzugsweise zur Randbearbeitung der Linse 2 ausgebildet. Hierauf wird später noch näher eingegangen.

Zusätzlich kann die Vorrichtung 1 oder Bearbeitungseinrichtung 3 gemäß einer Ausführungsvariante - ggf mit einem anderen (nicht dargestellten) Bearbeitungswerkzeug - auch zur Bearbeitung einer Flachseite 2A der Linse 2, insbesondere der dem Blockstück 4B abgewandten Flachseite 2A der Linse 2, eingesetzt werden. In diesem Fall wird die Linse 2 bzw. deren Flachseite 2A besonders bevorzugt durch Stirndrehen und/oder Fräsen bearbeitet.

Die andere, dem Blockstück 4B zugewandte Flachseite 2B der Linse 2 ist mit dem Blockstück 4B mittelbar oder unmittelbar verbunden. Besonders bevorzugt ist diese dem Blockstück 4B zugewandte Flachseite 2B bereits bearbeitet und/oder wird durch eine optionale Folie 5 vor Beschädigungen, insbesondere durch das Blockstück 4B bzw. durch Blockmaterial 4A des Block 4, geschützt. Die Flachseite 2B der Linse 2 bildet beispielsweise eine Vorderseite oder Frontseite eines Brillenglases bzw. der Linse 2 bei Verwendung in einer (nicht dargestellten) Brille bzw. in einem (nicht dargestellten) Brillengestell.

Die Folie 5 ist vorzugsweise sehr dünn ausgebildet. Die Dicke beträgt vorzugsweise etwa 0,05 bis 0,2 mm, insbesondere etwa 0,1 mm oder weniger. Die Folie 5 weist vorzugsweise eine definierte und/oder zumindest im Wesentlichen gleichmäßige Dicke auf.

Die Folie 5 besteht insbesondere aus Kunststoff. Mit einer Flachseite 5A ist die Folie 5 an der Linse 2 befestigt, beispielsweise auf die Linse 2 aufgeklebt, insbesondere zumindest im Wesentlichen vollflächig. Die andere Flachseite 5B ist dem Blockstück 4B zugewandt und vorzugsweise zumindest im Wesentlichen vollflächig mit dem Blockstück 4B bzw. Blockmaterial 4A verbunden. Jedoch kann die Folie 5 bzw. deren Flachseite 5B auch nur bereichsweise oder punktuell mit dem Blockstück 4B bzw. Blockmaterial 4A verbunden sein.

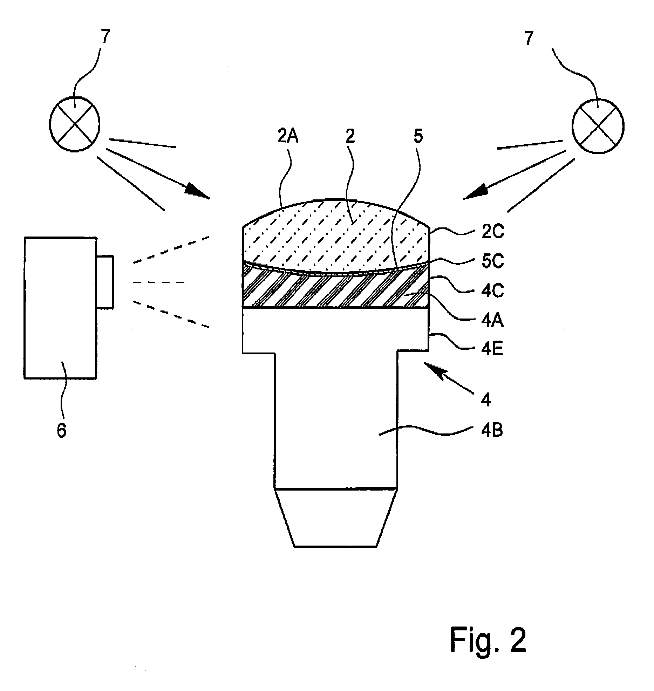

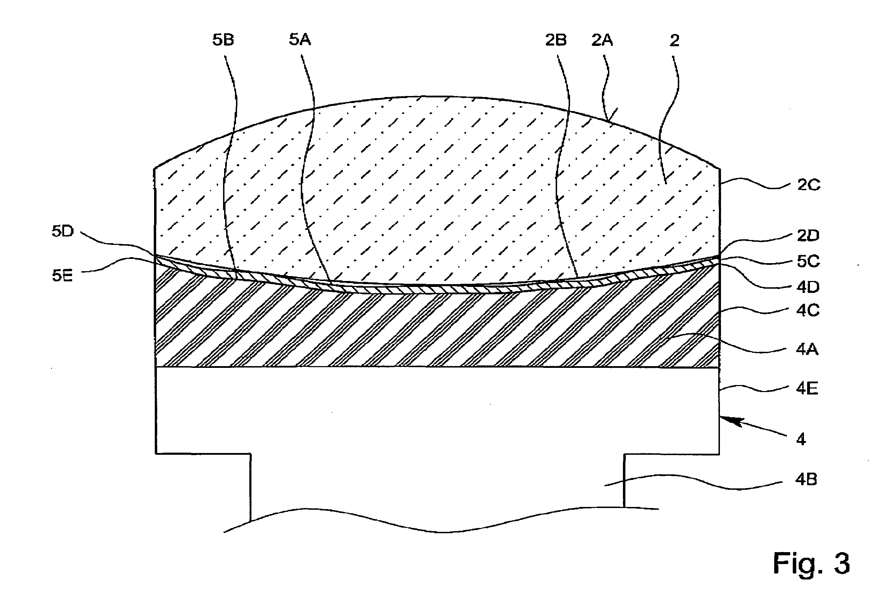

Das Blockstück 4B trägt vorzugsweise das Blockmaterial 4A, das mit der Linse 2 bzw. der zugeordneten Folie 5 zum Blocken der Linse 2 verbunden ist oder wird. Bei dem Blockmaterial 4A handelt es sich insbesondere um einen Kunststoff, besonders bevorzugt wie in der DE 20 2010 011 335 U1 beschrieben, die diesbezüglich als ergänzende Offenbarung eingeführt wird. Jedoch kann es sich bei dem Blockmaterial 4A grundsätzlich auch um eine vorzugsweise bei niedriger Temperatur schmelzende Legierung, wie sogenanntes Alloy-Blockmaterial, ein Harz, ein Wachs, einen Klebstoff, einen Klebestreifen o.dgl. handeln. Besonders bevorzugt verbindet das Blockmaterial 4A die Linse 2 bzw. Folie 5 durch entsprechendes Anhaften an der Linse 2 bzw. dem Blockstücks 4B, wie in Fig. 2 und 3 angedeutet. Jedoch sind auch andere konstruktive Lösungen möglich.

In den Figuren ist die Linse 2 mit dem Blockstück 4B verbunden. Dieser mit dem Blockstück 4B verbundene Zustand wird auch als "geblockt" bezeichnet. Die Halterung der durch das Blockmaterial 4A und Blockstück 4B wird auch als Block 4 bezeichnet.

Beim Darstellungsbeispiel ist das Blockstück 4B vorzugsweise in einem sich an die Linse 2 bzw. dem Blockmaterial 4A anschließenden Bereich 4E, gegenüber einem Einspannbereich radial verbreitert. Dies ist insbesondere im Hinblick auf eine große Stütz-, Haft- und/oder Anlagefläche des Blockstücks 4B zu der Linse 2 bzw. Folie 5 hin bevorzugt. Der Bereich 4E bildet vorzugsweise einen axialen Anschlag bzw. eine axiale Auflage für das Blockstück 4B beim Einspannen in der Aufnahme 3B.

Das Blockmaterial 4A haftet vorzugsweise zumindest im Wesentlichen vollflächig oder ganzflächig an der Linse 2 bzw. Folie 5 (sofern vorhanden). Hierbei ist anzumerken, dass die Linse 2 anfänglich auch radial bzw, randseitig über das Blockstück 4B und/oder Blockmaterial 4A seitlich vorstehen kann, bei der Randbearbeitung jedoch vorzugsweise soweit abgearbeitet bzw. abgetragen wird, dass vorzugsweise auch das Blockstück 4B, zumindest im Bereich 4E, bzw. Blockmaterial 4A umfangsseitig noch (etwas) abgetragen wird.

Grundsätzlich kann das Blockstück 4B bzw. Blockmaterial 4A jedoch auch nur partiell an der Linse 2 bzw. Folie 5 haften, beispielsweise die Linse 2 bzw. Folie 5 nur in mehreren voneinander getrennten Abstützstellen und/oder in einem Ringbereich o.dgl. tragen bzw. halten.

Fig. 2 zeigt in einer schematischen Darstellung die geblockte Linse 2, also die Linse 2 mit zugeordnetem bzw. daran befestigtem Blockstück 4B, sowie eine zugeordnete Kamera 6 und eine Beleuchtungseinrichtung 7 der Vorrichtung 1, wobei zwei unterschiedliche Anordnungen der Beleuchtungseinrichtung 7 angedeutet sind. Fig. 3 ist eine ausschnittsweise Vergrößerung von Fig. 2 im Bereich der Verbindung der Linse 2 mit dem Blockstück 4B bzw. Blockmaterial 4A.

Die Vorrichtung 1 bzw. Bearbeitungseinrichtung 3 ist vorzugsweise derart ausgebildet, dass die Linse 2 formgebend, insbesondere spanend, umfangsseitig, also randseitig, bearbeitbar ist bzw. bearbeitet wird. Besonders bevorzugt ist der Rand 2C der Linse 2 bearbeitbar, insbesondere durch Fräsen und/oder Schleifen bzw. mittels des Werkzeugs 3D. So kann die Linse 2 eine gewünschte Randform, beispielsweise eine runde, ovale, ggf. auch eckige oder sonstige Außenkontur bzw. Randform erhalten.

Die Randbearbeitung kann in einem Schritt oder in mehreren Schritten erfolgen. Beispielsweise kann zuerst eine Grobbearbeitung oder Vorbearbeitung und dann eine Feinbearbeitung erfolgen. Des Weiteren kann die Randbearbeitung auch mit einer Kantenbearbeitung kombiniert werden. Für die verschiedenen Bearbeitungsschritte oder Bearbeitungen können auch verschiedene Werkzeuge 3D eingesetzt und/oder verschiedene Bearbeitungsarten, wie Fräsen und Schleifen, kombiniert werden.

Die Randbearbeitung erfolgt beim Darstellungsbeispiel vorzugsweise bei geblockter Linse 2. Insbesondere wird der Block 4 bestehend aus Linse 2 und aus Blockmaterial 4A und/oder Blockstück 4B umfangsseitig bzw. randseitig formgebend bearbeitet. Vorzugsweise wird bei der Randbearbeitung der Linse 2 auch - zumindest teilweise ― das Blockstück 4B und/oder das Blockmaterial 4A randseitig bearbeitet bzw. abgetragen. Dieser Abtrag erfolgt insbesondere umfangsseitig bzw. randseitig, insbesondere entlang eines Randes 4C des Blockmaterials 4A und/oder entlang des radial verbreiterten Bereichs 4E des Blockstücks 4B und/oder um einen vorzugsweise unmittelbar an die Linse 2 angrenzenden Ringbereich des Blockstücks 4B und/oder Blockmaterials 4A herum.

Die Linse 2 kann anfänglich über das Blockstück 4B bzw. Blockmaterial 4A radial nach außen vorragen. Bei der Randbearbeitung wird die Linse 2 dann vorzugsweise radial derart abgetragen, dass zumindest partiell auch das Blockstück 4B bzw. dessen Blockmaterial 4A partiell randseitig bzw. umfangsseitig abgetragen wird, wobei hier eine Bearbeitung oder ein Abtrag des Blockstücks 4B oder Blockmaterials 4A über den gesamten Umfang herum besonders bevorzugt erfolgt, jedoch auch nur abschnittsweise über den Umfang erfolgen kann. In den Figuren sind die Linse 2 sowie das Blockmaterial 4A das Blockstück 4B im geblockten Zustand und jeweils nach 4A das Blockstuck 4B im geblockten Zustand und jeweils nach bereits erfolgter Randbearbeitung dargestellt.

Insbesondere bilden die Linse 2 einerseits und das Blockstück 4B bzw. dessen Bereich 4E und/oder das Blockmaterial 4A andererseits ― zumindest in einem sich an die Linse 2 anschließenden axialen Bereich oder Teilbereich ― bzw. deren Ränder 2C und 4C eine mehr oder weniger glatte äußere Randfläche, insbesondere zusammen mit der dazwischen liegenden, optionalen Folie 5 bzw. deren Rand 5C, wie insbesondere in der Vergrößerung gem. Fig. 3 angedeutet.

Besonders bevorzugt verlaufen die (bearbeiteten) Ränder 2C, 4C und/oder 5C der Linse 2, des Blockmaterials 4A, des Blockstücks 4B und/oder der Folie 5 ― im Längsschnitt entlang der Längs- oder Rotationsachse C ― zumindest im Wesentlichen parallel zu der Achse C. Grundsätzlich ist jedoch auch eine Neigung des Randes bzw. der Ränder 2C, 4C und/oder 5C zu dieser Achse C möglich.

Durch die randseitige Bearbeitung der Linse 2 wird die dem Blockmaterial 4A bzw. Blockstück 4B zugewandte Kante (Randkante) 2D der Linse 2, also die Kante 2D des Übergangs von dem Rand 2C zu der Flachseite 2B, neu gebildet. Insbesondere für die Qualitätskontrolle, für eine weitere Bearbeitung der Linse 2 bzw. des Randes 2C und/oder zur Bearbeitung der Randkante 2D ist es erforderlich oder vorteilhaft, den (neuen) Verlauf der Randkante 2D zu bestimmen.

Vorzugsweise erfolgt eine optische Erfassung des Übergangs des Linsenmaterials zu dem Blockmaterial 4A oder Blockstück 4B oder des Übergangs des Linsenmaterials zu der Folie 5 oder deren Rand 5C bzw. zu dem Folienmaterial, wenn die Folie 5 vorhanden ist und deren Rand 5C erfasst werden kann, und/oder eine optische Erfassung des Übergangs der Folie 5 bzw. des Folienmaterials zu dem Blockstück 4B bzw. Blockmaterial 4A, wobei daraus - vorzugsweise unter Berücksichtigung der Dreh- bzw. Winkellage der Linse 2 und/oder unter Berücksichtigung des Abstands des Rands 2C von der Achse C bzw. des Radius des Randes 2C - der Verlauf der Randkante 2D bestimmt wird. Die Vorrichtung 1 weist für diese optische Erfassung vorzugsweise eine entsprechende Erfassungseinrichtung, hier insbesondere die Kamera 6, und insbesondere die zugeordnete, optionale Beleuchtungseinrichtung 7 oder dergleichen auf.

Weiter weist die Vorrichtung 1 vorzugsweise eine Auswerteeinrichtung 8 zur vorgenannten Bestimmung des Verlaufs der Randkante 2D aus dem optisch erfassten Übergang bzw. aus den optisch erfassten Übergängen oder aus entsprechenden Daten, insbesondere Bilddaten, auf, wie in Fig. 1 schematisch angedeutet.

Die Vorrichtung 1 weist vorzugsweise eine Reinigungseinrichtung 9 zum Entfernen, insbesondere zum Wegblasen und/oder Wegspülen, von Bearbeitungsrückständen oder Verschmutzungen, insbesondere Spänen o.dgl., von dem Block 4 bzw, von der Linse 2 vor der optischen Erfassung auf. Mittels der Reinigungseinrichtung 9 kann insbesondere Druckluft und/oder Reinigungsflüssigkeit auf die Umfangsfläche bzw. den Rand 2C, 5C und/oder 4C oder generell auf die Linse 2 und/oder den Block 4 gerichtet werden. Jedoch sind auch andere konstruktive Lösungen möglich. Alternativ oder zusätzlich kann beispielsweise auch eine Bürste oder sonstige mechanische Reinigung o.dgl. eingesetzt werden.

Nachfolgend werden ein besonders bevorzugter Verfahrensablauf, mögliche Verfahrensvarianten und entsprechende, bevorzugte Ausbildungen der Vorrichtung 1 näher erläutert.

Optional wird die Linse 2 zunächst auf ihrer dem Block 4 bzw. Blockstück 4B abgewandten Flachseite 2A formgebend, insbesondere spanend, bearbeitet. Diese Bearbeitung kann durch die Vorrichtung 1 oder Bearbeitungseinrichtung 3 oder zumindest darin erfolgen. Jedoch kann diese Bearbeitung auch getrennt erfolgen. Je nach Ausgestaltung kann hierbei ein Umspannen der Linse 2 bzw. des Blockstücks 4B für die danach folgende Bearbeitung erfolgen oder aber auch nicht erforderlich sein, also vermieden werden.

Vorzugsweise wird die bearbeitete Flachseite 2A danach bzw. vor der Randbearbeitung beschichtet.

Die Linse 2 wird dann umfangsseitig bzw, randseitig formgebend, insbesondere spanend, bearbeitet, besonders bevorzugt um eine bestimmte Randform herzustellen. Die Randbearbeitung erfolgt vorzugsweise bei geblockter Linse 2. Vorzugsweise wird bei der Randbearbeitung der Linse 2 auch das Blockstück 4B und/oder dessen Blockmaterial 4A randseitig bearbeitet bzw. abgetragen. Die Randbearbeitung kann in mehreren Stufen bzw. Schritten und/oder mit unterschiedlichen Bearbeitungswerkzeugen 3 oder -arten erfolgen.

Insbesondere erfolgt bei der Randbearbeitung zuerst eine Grobbearbeitung, wobei insbesondere der Durchmesser sowohl der Linse 2 als auch des Blockstücks 4B bzw. dessen Bereich 4E und/oder des Blockmaterials 4A reduziert wird, besonders bevorzugt wird das Blockmaterial 4A hierbei zumindest partiell auf den gleichen Durchmesser wie die Linse 2 abgetragen oder zerspant, um eine Startkontur für die endgültige Randbearbeitung zu bilden. Bei dieser Endbearbeitung erfolgt insbesondere eine Feinbearbeitung des Rands 2C der Linse 2.

Nach der Randbearbeitung erfolgt vorzugsweise ein Reinigen, insbesondere Wegspülen und/oder Wegblasen, von Bearbeitungsrückständen, Spänen o.dgl. Das Reinigen erfolgt insbesondere mittels der Reinigungseinrichtung 9 bzw. Druckluft, Spülflüssigkeit o.dgl. Das Reinigen kann auch mehrmals wiederholt werden oder in mehreren Schritten erfolgen, insbesondere bei mehrstufiger Randbearbeitung.

Anschließend erfolgt die Bestimmung des Verlaufs der dem Blockstück 4B zugewandten Randkante 2D der Linse 2. Zuvor sind vorzugsweise die Randbearbeitung und die Reinigung erfolgt. Jedoch ist die Reinigung nur optional. Des Weiteren ist die Randbearbeitung auch optional. Die nachfolgend erläuterte Bestimmung des Verlaufs der Randkante 2D oder einer sonstigen Randkante der Linse 2 kann gemäß einer Variante also auch ohne vorherige Randbearbeitung oder sonstige Bearbeitung erfolgen.

Zur Bestimmung des Verlaufs der Randkante 2D wird zunächst deren (vermeintlicher) Verlauf bzw. der Übergang des Linsenmaterials zu dem sich vorzugsweise axial und/oder unmittelbar anschließenden Blockmaterial 4A bzw. Blockstück 4 oder der Folie 5 optisch, insbesondere mittels der Kamera 6, erfasst. Alternativ oder zusätzlich und/oder simultan wird der Verlauf der der Linse 2 zugewandten Kante 4D des Blockmaterials 4A und/oder des Rands 5C der Folie 5 und/oder von Kanten 5D und/oder 5E der Folie 5 und/oder der Übergang des Folienmaterials zu dem Blockstück 4B bzw. Blockmaterial 4A erfasst. Insbesondere erfolgt die Erfassung durch Aufnahme eines entsprechenden Bildes, Films oder mehrerer Bilder bzw. durch Aufnahme entsprechender Daten bzw. Bilddaten.

Zur optischen Erfassung über den gesamten Umfang wird vorzugsweise die Kamera 6 relativ zur Linse 2 um den Umfang herum bewegt. Dies erfolgt besonders bevorzugt durch entsprechendes Drehen der Linse 2, wobei insbesondere die jeweilige Dreh- bzw. Winkellage der Linse 2 bei der optischen Erfassung bzw. Bilderfassung mit berücksichtigt bzw. auch erfasst bzw. gespeichert und/oder, insbesondere den einzelnen Bildern, zugeordnet wird. Hierbei können dann von der Kamera 6 mehrere Einzelbilder in dichter Folge, beispielsweise in verschiedenen, definierten Drehstellungen oder Winkelstellungen um den Umfang der Linse 2 herum bzw, von verschiedenen Seiten der Linse 2, und/oder auch fortlaufend Bilddaten bzw, ein Film aufgenommen werden. Die so aufgenommenen oder erfassten Daten (Bild- und/oder Filmdaten) können je nach Bedarf zwischengespeichert und/oder ausgewertet werden, insbesondere in der Auswerteeinrichtung 8.

Bei der Verwendung einer Matrixkamera erfolgt vorzugsweise eine Synchronisation von Winkel (der Linse 2) und Bildnummer beim Abwickeln bzw. optischen Erfassen.

Bei der optischen Erfassung wird also vorzugsweise auch die jeweilige Winkellage der Linse 2 berücksichtigt bzw. erfasst, so dass bei der späteren Auswertung und Bestimmung des Verlaufs der Randkante 2D die Winkellage über den Umfang des Linsenrands 2C richtig berücksichtigt wird.

Die jeweilige Dreh- bzw. Winkellage der Linse 2 kann beispielsweise über die Werkstückspindel 3A oder einen zugeordneten Sensor o.dgl. erfasst und insbesondere gespeichert werden, so dass eine Berücksichtigung bei der Auswertung, insbesondere in der Auswerteeinrichtung 8, möglich ist bzw. wird.

Insbesondere erfolgt in der Vorrichtung 1 oder der Auswerteeinrichtung 8 eine Auswertung der vorgenannten Daten bzw. der erfassten Übergänge. Diese Auswertung, die bedarfsweise alternativ oder zusätzlich auch extern oder getrennt von der Vorrichtung 1 erfolgen kann, dient insbesondere der Bestimmung des Verlaufs der Randkante 2D.

Bedarfsweise kann die Auswerteeinrichtung 8 auch der Steuerung der weiteren Bearbeitung der Linse 2, insbesondere der (weiteren) Randbearbeitung und/oder Kantenbearbeitung dienen. Alternativ oder zusätzlich können die Auswerteeinrichtung 8 bzw. Vorrichtung 1 auch die hierfür erforderlichen Daten, wie den bestimmten Verlauf der Randkante 2D, speichern, anzeigen und/oder ausgeben, beispielsweise einer anderen Bearbeitungseinrichtung zur Verfügung stellen und/oder diese steuern.

Der bestimmte Verlauf kann alternativ oder zusätzlich auch der Qualitätskontrolle und/oder einer Abschlussmessung dienen.

Der Verlauf der Randkante 2D wird vorzugsweise mindestens auf 0,1 mm genau, insbesondere auf etwa 0,05 mm genau oder noch genauer, bestimmt.

Es ist anzumerken, dass die Linse 2 während der optischen Erfassung bzw. Aufnahme kontinuierlich oder diskontinuierlich relativ zu der Kamera 6 bewegt werden kann.

Weiter wird die Linse 2 bzw. der Block 4 bzw. der Rand 2C, 5C und/oder 4C während der optischen .Erfassung vorzugsweise beleuchtet, insbesondere mittels der optionalen Beleuchtungseinrichtung 7. Die Beleuchtung kann beispielsweise ausgehend von der Seite der Kamera 6 bzw. kameraseitig oder benachbart zu der Kamera 6 erfolgen, wie in Fig. 2 durch die Anordnung der Beleuchtungseinrichtung 7 auf der linken Seite angedeutet. Alternativ oder zusätzlich kann die Beleuchtungseinrichtung 7 oder eine weitere Beleuchtungseinrichtung 7 auch gegenüberliegend, insbesondere auf der der Kamera 6 gegenüberliegenden Seite der Linse 2 und/oder quer dazu bzw. quer zur Aufnahmerichtung seitlich und/oder oberhalb der Linse 2 angeordnet werden. Alternativ oder zusätzlich ist auch eine axiale Beleuchtung der Linse 2, insbesondere bei der Darstellung gem. Fig. 2 von oben her, möglich.

Zur Erleichterung der optischen Erfassung und/oder Auswertung erfolgt die optische Erfassung vorzugsweise unter definierten optischen Umgebungsbedingungen, beispielsweise in einem abgedunkelten Raum und/oder mit definierter Beleuchtung, beispielsweise nur durch die Beleuchtungseinrichtung 7.

Vorzugsweise erfolgt die Beleuchtung mit einem definierten oder vorbestimmten Beleuchtungsspektrum, insbesondere mit zumindest im Wesentlichen monochromatischem Licht oder Laserlicht o.dgl.

Die Wellenlänge des Lichts, mit dem beleuchtet wird, oder das Beleuchtungsspektrum ist vorzugsweise derart ausgewählt, dass die Kanten oder Übergänge zwischen den verschiedenen Materialien, wie dem Linsenmaterial, dem Folienmaterial und/oder dem Blockmaterial 4A, besonders deutlich oder leicht optisch erfassbar sind.

Es werden vorzugsweise Materialien mit unterschiedlichen optischen Eigenschaften eingesetzt. Insbesondere unterscheiden sich das Linsenmaterial, das Folienmaterial und/oder das Blockmaterial 4A und/oder das Material des Blockstücks 4B hinsichtlich ihrer optischen Eigenschaften, insbesondere hinsichtlich Farbe, Reflektivität, Transmissivität und/oder Lumineszenz. Beispielsweise kann das Folienmaterial und/oder Blockmaterial 4A lumineszierend sein, wobei die Beleuchtungseinrichtung 7 dann vorzugsweise eine entsprechende Lumineszenz hervorruft, die optisch, insbesondere von der Kamera 6 erfassbar ist. Hierzu kann beispielsweise auch im UV-Bereich gearbeitet, insbesondere beleuchtet und/oder erfasst, werden.

Zur Bestimmung des Verlaufs der Randkante 2D kann insbesondere die unterschiedliche Materialstruktur und/oder Färbung des Linsenmaterials einerseits und des Folienmaterials und/oder Blockmaterials 4A und/oder Materials des Blockstücks 4B andererseits erfasst und ausgewertet werden.

Bei der Kamera 6 kann es sich insbesondere um eine Zeilenkamera oder Matrixkamera bzw, einen sonstigen entsprechenden Bildsensor, insbesondere mit geeigneter Optik, handeln.

Vorzugsweise ist die Kamera 6 gekapselt und/oder auf sonstige Weise, beispielsweise durch eine Zwischenwand, von der eigentlichen Bearbeitung getrennt, um eine unerwünschte Verschmutzung oder Beeinträchtigung der Kamera 6 bzw. der optischen Erfassung zu vermeiden.

Vorzugsweise kann eine Reinigung der Kamera 6 bzw. deren Optik o.dgl. erfolgen, beispielsweise durch die Reinigungseinrichtung 9 oder eine sonstige Reinigungseinrichtung.

Alternativ oder zusätzlich kann die Kamera 6 aus dem eigentlichen Bearbeitungsraum heraus bewegbar sein und/oder die zu untersuchende Linse 2 bzw. der zu untersuchende Block 4, beispielsweise mittels des genannten Kreuzschlittens bzw. der Werkstückspindel 3A, besonders bevorzugt ohne Umspannen, zu der Kamera 6, besonders bevorzugt nach erfolgter Randbearbeitung und/oder Reinigung, beispielsweise in einen entsprechenden Untersuchungsraum mit der Kamera 6, bewegbar sein.

Nach der genannten optischen Erfassung erfolgt die Auswertung. Hierbei wird aus den genannten Daten bzw. Informationen vorzugsweise ein (angenäherter) Verlauf der Randkante 2D bestimmt. Alternativ oder zusätzlich werden hierbei auch die Verläufe des Rands 5C und/oder der Kanten 5D, 5E und/oder 4D ermittelt bzw. bestimmt.

Zur Bestimmung des Verlaufs der Randkante 2D werden vorzugsweise die nachfolgenden Schritte einzeln oder in beliebiger Kombination ausgeführt bzw, eingesetzt:
1. Es erfolgt ein Glätten und/oder Approximieren des Verlaufs der Randkante 2D, insbesondere durch einen Spline höherer Ordnung, beispielsweise vierter Ordnung oder höher.
2. Es erfolgt eine Korrektur des Verlaufs der Randkante 2D. Beispielsweise kann hierbei berücksichtigt werden, dass die Folie 5 manchmal über ihren Außenumfang etwas gewellt ist und dementsprechend nicht ideal vollflächig über den Außenumfang an der zugeordneten Linse 2 anliegt. Bei entsprechender Erfassung des Verlaufs der Folie 5 bzw. des Rands 5C und/oder der Kante 5D und/oder 5E der Folie 5 kann beispielsweise berücksichtigt werden, dass die Linse 2 nur auf Erhebungen der Folie 5 im Randbereich aufliegt bzw. Erhebungen der Folie 5 Anlagepunkte an der Linse 2 bzw. der zu ermittelnden Randkante 2D bilden.
3. Es werden Solldaten, beispielsweise bezüglich des zu erwarteten Sollverlaufs der Randkante 2D und/oder der Solldicke der Folie 5 berücksichtigt. Zusätzlich oder alternativ können auch Daten aus der Vorfertigung bzw. Grobbearbeitung berücksichtigt werden.
4. Aus den erfassten Daten bzw, Verläufen wird eine mittlere Dicke der Folie 5 bestimmt, die beispielsweise zur Korrektur von erfassten Verläufen oder Übergängen eingesetzt wird, insbesondere unter der Annahme einer zumindest im Wesentlichen konstanten Dicke der Folie 5.

So kann aus den Daten bzw, aus den erfassten Verläufen bzw. Übergängen der Verlauf der Randkante 2D bestimmt, insbesondere also approximiert oder genähert, werden.

Der bestimmte Verlauf kann dann gespeichert, angezeigt und/oder weiterverarbeitet werden. Insbesondere wird der bestimmte Verlauf für eine nachfolgende Bearbeitung der Linse 2, des Rands 2C und/oder der Randkante 2D, beispielsweise für ein Fasen der Randkante 2D und/oder eine sonstige, vorzugsweise formgebende Bearbeitung insbesondere der Randkante 2D, eingesetzt.

Bedarfsweise kann zusätzlich eine zweite Kamera eingesetzt werden, die vorzugsweise ebenfalls den Rand 2C, 5C und/oder 4C beobachtet und/oder zu der ersten Kamera 6 entlang des Umfangs, besonders bevorzugt um etwas 90° versetzt ist und/oder quer zur ersten Kamera 6 ausgerichtet ist, insbesondere um den Radius- oder Durchmesser des bearbeiteten Randes 2C, 5C und/oder 4C und/oder den Randverlauf bzw. Radius- oder Durchmesserverlauf in Abhängigkeit von der Drehlage erfassen zu können und/oder um eine genauere optische Erfassung und Auswertung zu ermöglichen.

Alternativ oder zusätzlich kann die vorgenannte Radius- oder Durchmessererfassung auch durch einen Taster und/oder eine sonstige Abstands- bzw. Lagemessung unterstützt oder realisiert werden, beispielsweise durch eine optische Abstandsmessung oder sonstige Abstandsmessung, beispielsweise zur Messung des Abstands von einem festen Punkt oder der Kamera 6 zu dem Rand 2C, 5C und/oder 4C.

Der abgewickelte Rand 2C, 5C und/oder 4C, der durch die Kamera 6 optisch erfasst wird, zeigt quer zur Abwicklungsrichtung mindestens zwei Zonen oder Bereiche, nämlich den Rand 2C des Linsenmaterials bzw. der Linse 2 und den bei den Darstellungen darunter liegenden Rand 4C des Blockstücks 4B bzw. Blockmaterials 4A, wobei zwischen diesen beiden Bereichen oder Rändern 2C, 4C bei Einsetzen der optionalen Folie 5 noch zusätzlich der Rand 5C als Zwischenbereich liegt. Vorzugsweise werden die Übergänge zwischen diesen Bereichen erfasst und/oder ausgewertet.

Vorzugsweise wird berücksichtigt, dass beim Zerspanen oder bei der sonstigen formgebenden Randbearbeitung Ausbrüche an der Randkante 2D entstehen können, die zu Unterbrechungen der sonst kontinuierlich verlaufenden Randkante 2D und damit auch zu Fehlmessungen fuhren können. Derartige Unterbrechungen oder Fehlmessungen können insbesondere durch das bereits erwähnte Glätten bzw. Approximieren korrigiert oder ausgefiltert werden.

Die Folie 5, sofern vorhanden, weist vorzugsweise eine bekannte und/oder konstante Foliendicke auf. In der Abwicklung muss sich dementsprechend ein gleichmäßiges Band bilden. Das Band kann insbesondere an den vorgenannten Stellen der Ausbrüche eine kontinuierlich verlaufende Kante 5D bilden, die insbesondere zur Bestimmung des tatsächlichen Verlaufs der Randkante 2D im Bereich der Ausbrüche des Linsenmaterials geeignet ist.

Hierbei ist zu berücksichtigen, dass es sich bei dem Verlauf der Randkante 2D generell bei der vorliegenden Erfindung vorzugsweise um eine Näherung handelt, die den wirklichen Verlauf nach der Randbearbeitung, insbesondere nach der Grobbearbeitung, derart darstellt, dass nachfolgend eine sehr genaue weitere Randbearbeitung bzw. Kantenbearbeitung, insbesondere eine Feinbearbeitung, mit der gewünschten Präzision bzw. geringen Toleranzen möglich ist.

Da es beim Aufbringen der Folie 5 auf die Linse 2 gerade im Randbereich zu Faltungen und/oder zum Einschluss von Luftblasen kommen kann, können entsprechende Wellen oder Verwerfungen auftreten, wie in dem leicht wellenartigen Verlauf des Randes 5C gegenüber dem Rand 2C in Fig. 3 schematisch angedeutet. Diese Verwerfungen oder Wellen werden besonders bevorzugt ausgefiltert. Entsprechendes kann auch beim Übergang der Folie 5 zu dem Blockmaterial 4A auftreten, wobei dies wiederum durch entsprechendes Filtern berücksichtigt werden kann.

Zur Bestimmung des Verlaufs der Randkante 2D wird bei einer Anordnung ohne Folie 5 der Übergang zwischen dem Linsenmaterial einerseits und dem Blockmaterial 4A andererseits erfasst und ausgewertet, wobei zusätzlich eine Filterung der Materialausbrüche, Messfehler usw. erfolgen kann, insbesondere um eine gewisse Glättung bzw. einen kontinuierlichen Verlauf zu erreichen.

Wenn die Folie 5 vorhanden ist, können zur Bestimmung des tatsächlichen Verlaufs der Randkante 2D ausgewertet werden der Übergang Linsenmaterial-Folienmaterial und/oder der Übergang Folienmaterial-Blockmaterial 4A. Diese Übergänge stellen Verläufe dar. Diese Übergänge bzw. Verläufe können je nach Bedarf wiederum gefiltert werden, wie bereits oben erwähnt, insbesondere zur Korrektur von Materialausbrüchen, Messfehlern o.dgl. Zusätzlich kann insbesondere bei der Auswertung des Übergangs oder Verlaufs von Folienmaterial-Blockmaterial 4A die Foliendicke berücksichtigt werden, wobei die Foliendicke insbesondere als konstant angenommen wird. Die Foliendicke kann als Sollwert vorgegeben und/oder durch die optische Erfassung und anschließende Auswertung, beispielsweise als Mittelwert, bestimmt und dann zur Korrektur verwendet werden.

Die vorschlagsgemäße Bestimmung des Verlaufs der Randkante 2D, insbesondere die Auswertung, das Glätten und/oder Approximieren und/oder sonstige Korrigieren und/oder die Datenverarbeitung, insbesondere der von der Kamera 6 o,dgl, gelieferten Daten, wie Bilddaten oder Filmdaten, erfolgt oder erfolgen vorzugsweise durch einen entsprechenden Prozessor oder Computer und/oder durch entsprechende Software und/oder in der Auswerteinrichtung 8.

Weiter kann zusätzlich oder alternativ auch eine Auswertung auf Materialfehler, Risse, unerwünschte Ausbrüche o.dgl, erfolgen. Hierzu werden insbesondere die von der Kamera 6 aufgenommenen Daten entsprechend ausgewertet.

Alternativ oder zusätzlich kann eine problematische oder nicht mögliche Bestimmung des tatsächlichen Verlaufs der Randkante 2D auf einen Fehler hindeuten. In diesem Fall kann beispielsweise eine zusätzliche Überprüfung oder Messung erfolgen.

Nach Bestimmung des Verlaufs erfolgt vorzugsweise eine weitere Bearbeitung, insbesondere Feinbearbeitung, der Linse 2, insbesondere des Rands 2C und/oder der Randkante 2D, unter Berücksichtigung des bestimmten Verlaufs. Diese weitere Bearbeitung erfolgt vorzugsweise ohne Umspannen der Linse 2 bzw. des Blockstücks 4B und/oder in der gleichen Vorrichtung 1 oder Bearbeitungseinrichtung 3, auch wenn ggf. andere Bearbeitungswerkzeuge eingesetzt werden und/oder auch wenn eine andere Art der Bearbeitung, beispielsweise Feindrehen statt Fräsen, erfolgt.

### Bezugszeichenliste

- 1: Vorrichtung
- 2: Linse
2A 2B 2D Flachseite Flachseite 2C Rand Kante
- 3: Bearbeitungseinrichtung
3A Werkstückspindel
3B Aufnahme
3C Antrieb
3D Werkzeug
- 4: Block
4A Blockmaterial
4B Blockstück 4C Rand
4D Kante
4E verbreiterter Bereich
- 5: Folie
5A Reinigungsraum
5A Flachseite
5B Flachseite
5C Rand
5D Kante
5E Kante
- 6: Kamera
- 7: Beleuchtungseinrichtung
- 8: Auswerteeinrichtung
- 9: Reinigungseinrichtung

- A: Drehachse
- B: Schwenkachse
- C: Rundachse
- X: Linearachse
- Y: Linearachse
- Z: Linearachse

## Patentansprüche

1. Vorrichtung (1) zum Bearbeiten einer optischen Linse (2), mit einer Bearbeitungseinrichtung (3) zum umfangsseitigen Bearbeiten der auf einem Blockstück (4B) oder Blockmaterial (4A) geblockten Linse (2),
**dadurch gekennzeichnet,**
**dass** die Vorrichtung (1) eine Kamera (6) zur optischen Erfassung des Übergangs des Linsenmaterials zu dem Blockstück (4B) oder Blockmaterial (4A) und/oder zu einer optional zwischen Linse (2) und Blockstück (4) angeordneten Folie (5) und/oder zur optischen Erfassung des Übergangs der Folie (5) zu dem Blockstück (4B) oder Blockmaterial (4A) aufweist und
**dass** die Vorrichtung (1) derart ausgebildet ist, dass aus dem erfassten Übergang oder den erfassten Übergängen ein Verlauf der dem Blockstück (4B) bzw. Blockmaterial (4A) zugewandten Randkante (2D) der Linse (2) bestimmt wird.

2. Vorrichtung nach Anspruch 1, **dadurch gekennzeichnet, dass** die Vorrichtung (1) derart ausgebildet ist, dass die dem Blockstück (4B) zugewandte Randkante (2D) der umfangsseitig bearbeiteten Linse (2) bei geblockter Linse (2) bearbeitet wird.

3. Vorrichtung nach Anspruch 1 oder 2, **dadurch gekennzeichnet, dass** die Vorrichtung (1) derart ausgebildet ist, dass die dem Blockstück (4B) zugewandte Randkante (2D) der umfangsseitig bearbeiteten Linse (2) in Abhängigkeit von dem bestimmten Verlauf bearbeitet wird.

4. Vorrichtung nach einem der voranstehenden Ansprüche, **dadurch gekennzeichnet, dass** die Kamera (6) seitlich neben der geblockten Linse (2) angeordnet ist.

5. Vorrichtung nach einem der voranstehenden Ansprüche, **dadurch gekennzeichnet, dass** die Kamera (6) relativ zur Linse (2) entlang des Umfangs zur Erfassung des Übergangs bzw. der Übergänge bewegt wird.

6. Vorrichtung nach einem der voranstehenden Ansprüche, **dadurch gekennzeichnet, dass** die Vorrichtung (1) eine Beleuchtungseinrichtung (7) zur seitlichen und/oder axialen Beleuchtung der Linse (2) während der Erfassung des Verlaufs bzw. der Verläufe aufweist,

7. Vorrichtung nach Anspruch 6, **dadurch gekennzeichnet, dass** die Beleuchtungseinrichtung (7) die Linse (2) kameraseitig oder benachbart zur Kamera (6) angeordnet ist.

8. Vorrichtung nach Anspruch 6, **dadurch gekennzeichnet, dass** die Beleuchtungseinrichtung (7) auf der der Kamera (6) gegenüberliegenden Seite der Linse (2) angeordnet ist.

9. Verfahren zum Bearbeiten einer optischen Linse (2), wobei die Linse (2) auf einem Blockstück (4B) oder Blockmaterial (4A) geblockt und umfangsseitig bearbeitet wird,
**dadurch gekennzeichnet,**
**dass** das Blockstück (4B) und/oder Blockmaterial (4A) zusammen mit der Linse (2) umfangsseitig bearbeitet wird und
**dass** der Übergang des Linsenmaterials zu dem Blockstück (4B) oder Blockstückmaterial (4A) oder zu einer optional zwischen Linse (2) und Blockstück (4B) angeordneten Folie (5) und/oder der Übergang der Folie (5) zu dem Blockstück (4B) Blockmaterial (4A) optisch erfasst und daraus ein tatsächlicher Verlauf der dem Blockstück (4B) oder Blockmaterial (4A) zugewandten Randkante (2D) der Linse (2) bestimmt wird.

10. Verfahren nach Anspruch 9, **dadurch gekennzeichnet, dass** Bearbeitungsrückstände, insbesondere Späne, vor der optischen Erfassung entfernt, insbesondere weggespült und/oder weggeblasen, werden.

11. Verfahren nach Anspruch 9 oder 10, **dadurch gekennzeichnet, dass** der Verlauf durch Glätten und/oder Approximieren und/oder unter Verwendung von Solldaten oder Bearbeitungsdaten und/oder unter Berücksichtigung einer konstanten Dicke, der Solldicke oder einer mittleren Dicke der Folie (5), sofern vorhanden, aus dem erfassten Übergang oder den erfassten Übergängen bestimmt wird.

12. Verfahren nach einem der Ansprüche 9 bis 11, **dadurch gekennzeichnet, dass** die Randkante (2D) und/oder der Rand (2C) der Linse (2) in Abhängigkeit von dem bestimmten Verlauf, insbesondere bei geblockter Linse (2), vorzugsweise spanend, bearbeitet, insbesondere feinbearbeitet, wird.

13. Verfahren nach einem der Ansprüche 9 bis 12, **dadurch gekennzeichnet, dass** sich das Material der Folie (5) zur Erleichterung der optischen Erfassung hinsichtlich Farbe, Reflektivität, Transmissivität und/oder Lumineszenz von dem Material der Linse (2) unterscheidet.

14. Verfahren nach einem der Ansprüche 9 bis 13, **dadurch gekennzeichnet, dass** sich das Blockmaterial (4A) zur Erleichterung der optischen Erfassung hinsichtlich Farbe, Reflektivität, Transmissivität und/oder Lumineszenz von dem Material der Linse (2) und/oder Folie (5) unterscheidet.

15. Verfahren nach einem der Ansprüche 9 bis 14, **dadurch gekennzeichnet, dass** das Blockstück (4B) mit oder aus Kunststoff hergestellt oder gebildet ist, zumindest in dem Bereich der umfangseitigen Bearbeitung.
